# EUROPEAN PATENT APPLICATION

(11) **EP 4 814 535 A1**
(43) Date of publication of application: **30.09.2026**
(21) Application number: 26167330.5
(22) Date of filing: 24.03.2026
(51) Int. Cl.: G01S 7/41, G01S 13/90, G01S 13/95

(54) **METHOD FOR ESTIMATING WIND SPEED, RELATED PROCESSING SYSTEM AND COMPUTER PRODUCT**

(30) Priority: 27.03.2025 IT 202500006456
(71) Applicant: Aizoon S.r.l., 10146 Torino (TO) (IT)
(72) Inventor: CORCIONE, Valeria, 10146 Torino (TO) (IT); BIANCO, Selene, 10146 Torino (TO) (IT); MARAGLIANO, Matteo, 10146 Torino (TO) (IT); BONFIGLIO, Debhora, 10146 Torino (TO) (IT); RODI, Giovanna Chiara, 10146 Torino (TO) (IT); MARANGONI, Stefano, 10146 Torino (TO) (IT)
(74) Representative: Buzzi, Notaro & Antonielli d'Oulx S.p.A.

(57) **Abstract**

Solutions are described for estimating wind speed. In particular, a processing system receives an image (1000) acquired by a synthetic aperture radar (100), wherein the image (1000) relates, at least in part, to an area covered by water. Moreover, the processing system receives a set (320) of reference datasets (R1-RK), wherein each reference dataset (R1-RK) comprises a respective reference image (IMG) acquired by a synthetic aperture radar (100) and a respective wind speed value (*U*), wherein each image (IMG) relates, at least in part, to an area covered by water.

During a pre-processing phase (2000-2006), the processing system repeats various steps for the image (1000) and for each reference image (IMG). In particular, the processing system divides (2000) the image (IMG, 1000) into blocks and selects the blocks (***B**ᵢ*) relating to the area covered by water. Subsequently, the processing system estimates (2002; 1004-1012), for each block (***B**ᵢ*), a value (*λ_{c,i}*) indicative of the azimuth cutoff, calculates (2004), for each block (***B**ᵢ*), a value (Di) indicative of the variance of the values of the respective block (***B**ᵢ*), and calculates: a first value (*F1*; *F4*) indicative of the mean of the azimuth cutoff values (*λ*_{*c*,}*ᵢ)*, a second value (*F2*; *F5*) indicative of the median of the azimuth cutoff values (*λc*,*i*)*,* a third value (*F3*; *F6*) indicative of the mode of the azimuth cutoff values (*λ*_{*c*,}*ᵢ)*: and a fourth value (*F7*; *F8*) indicative of the mean of the variance values (*Dᵢ*).

Subsequently, the processing system estimates the wind speed for the image (1000) as a function of the first value (*F1*; *F4*), the second value (*F2*; *F5*), the third value (*F3*; *F6*) and the fourth value (*F7*; *F8*) calculated for the image, and of the first value (*F1*; *F4*), the second value (*F2*; *F5*), the third value (*F3*; *F6*) and the fourth value (*F7*; *F8*) calculated for each reference image (IMG) and the respective wind speed values (*U*).

## Description

### Technical field

Various embodiments of the present disclosure concern solutions for estimating wind speed based on data obtained by a synthetic aperture radar, which monitors a delimited water surface.

### Background

Marine surface wind is a crucial parameter that influences both oceanic and atmospheric processes. Satellite observations of marine surface wind are now routinely used in various oceanographic, atmospheric, and climatic applications. Real-aperture microwave sensors are widely employed to provide these observations to operational communities in oceanography and meteorology. For example, scatterometers can provide accurate data on marine surface wind speed with a resolution of 25 km and dense temporal sampling, making them suitable for assimilation into Numerical Weather Prediction (NWP) models, as described, for example, in the article by Hersbach H., Stoffelen A., de Haan S., "An improved C-band scatterometer ocean geophysical model function: CMOD5," Journal of Geophysical Research: Oceans, 2007, 112(C3), doi:10.1029/2006JC003743, the content of which is incorporated herein by reference.

Despite the recognized importance of microwave sensors for operational surface wind measurements, their relatively low spatial resolution has led to the development of wind speed retrieval techniques based on measurements made with a Synthetic Aperture Radar (SAR). SAR, a type of microwave radar, offers high spatial resolution images. Images obtained from SAR can achieve a spatial resolution up to the order of meters, which allows for the analysis of very fine details of the Earth's surface. In particular, SAR images with a resolution of at least 1 km can be used to estimate wind fields over large water-covered surfaces. Several techniques have been proposed to estimate surface wind speed as a function of SAR data, commonly using the Normalized Radar Cross Section (NRCS) or radar backscatter. Various empirical Geophysical Model Functions (GMFs), initially developed for C-band scatterometric measurements with vertical polarization in both transmission and reception (Vertical Transmit-Vertical Receive, VV), have subsequently been adapted for SAR measurements at different frequencies and polarizations. In this regard, the article by A. Stoffelen, J. A. Verspeek, J. Vogelzang, A. Verhoef, "The CMOD7 Geophysical Model Function for ASCAT and ERS Wind Retrievals," in IEEE Journal of Selected Topics in Applied Earth Observations and Remote Sensing, vol. 10, no. 5, 2017, doi:10.1109/JSTARS.2017.2681806, the content of which is incorporated herein by reference, can be cited. However, radar backscatter is sensitive to both wind speed and direction, making methodologies necessary to constrain wind direction information during speed retrieval using GMFs. Errors in wind direction estimation can indeed propagate into wind speed estimation.

The azimuth cutoff technique, introduced in the article by Kerbaol Vincent, Chapron Bertrand, Vachon Paris W., "Analysis of ERS-1/2 synthetic aperture radar wave mode imagettes," Journal Of Geophysical Research: Oceans, 1998, 103(C4), 7833-7846, doi:10.1029/97JC01579, the content of which is incorporated herein by reference, allows estimating the Significant Wave Height (SWH) and surface wind speed without requiring any data calibration or preliminary wind direction information.

This technique is based on the influence of the orbital motion of surface waves on the sea surface, as sampled by the SAR system. This phenomenon causes Doppler shifts that distort the phase history of the backscattered signal, which is used to synthesize the azimuth resolution. The result is a SAR image characterized by low-pass filtering, wherein the azimuth cutoff (or azimuth cutoff wavelength, *λ_{c}*) can be interpreted as the effective azimuth resolution of the SAR.

Two main phenomena contribute to the azimuth cutoff: the azimuth displacement of a moving scatterer with a radial velocity component towards the radar and the velocity spread of the mean displacement of the SAR resolution cell, which causes an image blurring effect. The azimuth cutoff is sensitive to long waves (over 150 m) and shows a good correlation with the Significant Wave Height (SWH). When these waves are in equilibrium with the local wind, a reliable method for wind retrieval can be developed.

As mentioned before, several fundamental studies have explored the azimuth cutoff technique. For example, Kerbaol et al. theoretically analyzed the azimuth cutoff in relation to the surface wave spectrum, discussing its dependence on wind speed and SWH, using SAR data from the ERS-1/2 satellites. In particular, these studies identified a linear dependence between *λ_{c}* and wind speed U, expressed as: ${λ}_{c} = a + bU ,$ where *a* and *b* are constants based on the data. However, this relationship is valid only under fully developed sea conditions and in the absence of swell.

Therefore, since *λ_{c}* can be used to estimate wind speed under fully developed sea conditions and in low to moderate wind regimes (5-25 m/s), the literature has conducted further evaluations and optimizations of the technique. For example, the article by Corcione, V., Grieco, G., Portabella, M., Nunziata, F., & Migliaccio, M., "A novel azimuth cutoff implementation to retrieve sea surface wind speed from SAR imagery," IEEE Transactions on Geoscience and Remote Sensing, 2018, 57(6), 3331-3340, presents an optimized, robust, and automatic implementation of the azimuth cutoff method.

For this purpose, multilook SAR images from the European Space Agency's (ESA) Sentinel-1, collected under varying wind speed and incidence angle conditions, were used to estimate wind speed and Significant Wave Height (SWH) via the azimuth cutoff method. In this context, the dependence of *λ_{c}* on surface wind speed and SWH improves when the incidence angle and mean wave direction are also considered. Experimental results show that *λ_{c}* depends on the square root of SWH, while a linear dependence with wind speed applies under fully developed sea conditions.

In this context, wind analysis may also be necessary on limited water surfaces, such as lakes and flooded areas. The related information can be useful for various sectors, including water resource management, navigation, civil protection, and natural disaster forecasting. Therefore, the solutions described earlier could also be applied to wind analysis on limited water surfaces.

As mentioned before, techniques for estimating wind speed in marine areas often rely on Synthetic Aperture Radar (SAR). However, geophysical models based on the Normalized Radar Cross Section (NRCS) require preliminary information and precise calibration, limiting their effectiveness in non-marine environments.

Instead, the spectral technique in the frequency domain, based on SAR azimuth cutoff, offers significant advantages over such methods. Indeed, this methodology does not require preliminary information or calibration, making it more versatile for use in different contexts, including lakes and flooded areas. However, SAR-based wind speed estimation models have been validated only in open ocean environments, where wind-water surface interactions are more predictable and homogeneous. In fact, models based on azimuth cutoff assume a fully developed sea state.

A fully developed sea state occurs when wind blows over a water surface for a sufficiently long time and over an adequate distance (called fetch) at constant speed. In this situation, the waves have had the necessary time to grow until reaching their maximum height and energy level. It is as if the sea had all the time to adapt to the force of the wind, reaching an equilibrium between the energy transferred from the wind to the waves and that dissipated through natural processes, such as wave breaking and surface turbulence.

In particular, in a fully developed sea state, waves stop growing in height or energy. This is because the energy transferred from the wind to the surface is balanced by the energy lost through wave movement. The size and length of the waves under these conditions depend primarily on wind speed: stronger winds produce larger waves with longer periods.

Another essential element for the complete development of the sea is the distance over which the wind blows, i.e., the fetch. If this distance is too short, the waves will not have enough space to develop fully. The same applies to the duration of the wind: if the wind does not blow long enough, the waves will not reach their maximum potential.

In contrast, inland areas present a unique challenge due to the smaller spatial scales, the greater variability of environmental factors, and the lack of validated models for such regions.

### Summary

In this context, various embodiments of the present description provide new highly reliable solutions for wind speed estimation, specifically adapted for inland water bodies.

According to one or more embodiments, this object is achieved through a method having the distinctive elements set forth specifically in the claims that follow. The embodiments further concern a related processing system, as well as a corresponding computer product, loadable into the memory of at least one computer and comprising portions of software code for performing the steps of the method when the product is executed on a computer. As used herein, reference to such a computer product is intended to be equivalent to a reference to a computer-readable medium containing instructions for controlling a processing system to coordinate the execution of the method. The reference to "at least one computer" is intended to clearly highlight the possibility that the present description may be implemented in a distributed/modular manner.

The scope of protection is defined in the appended claims, which are an integral part of the technical teaching of the description provided herein.

As mentioned earlier, various embodiments of the present disclosure concern solutions for estimating wind speed. In various embodiments, a processing system receives an image obtained from a synthetic aperture radar, wherein the image concerns at least in part an area covered by water. The processing system also receives a set of reference datasets, wherein each reference dataset comprises a respective reference image obtained from a synthetic aperture radar and a respective wind speed value. In particular, each reference image also concerns at least in part an area covered by water.

In various embodiments, during a preprocessing phase, the processing system repeats various operations for the image and each reference image. In particular, the processing system divides the image into blocks and selects the blocks that concern the respective area covered by water, such as lakes or flooded surfaces. In various embodiments, each block concerns an area that has between 480 and 1640 m in an azimuth direction and between 480 and 1640 m in a range direction.

In various embodiments, the processing system then estimates for each block a value indicative of the azimuth cutoff. For example, for this purpose, the processing system can compute for the block the power spectral density in the azimuth direction, compute the autocorrelation function of the power spectral density in the azimuth direction or the cross-correlation function of the power spectral density in the azimuth direction of multiple blocks concerning the same geographical area, approximate the autocorrelation or cross-correlation function with a Gaussian function, and compute the value indicative of the azimuth cutoff as a function of the standard deviation of the Gaussian function.

In various embodiments, the processing system also computes for each block a value indicative of the variance of the values of the respective block.

In various embodiments, the processing system computes the values of a plurality of features. In particular, in various embodiments, the processing system computes a first value indicative of the mean of the azimuth cutoff values, a second value indicative of the median of the azimuth cutoff values, a third value indicative of the mode of the azimuth cutoff values, and a fourth value indicative of the mean of the variance values.

In various embodiments, the processing system then estimates the wind speed for the image as a function of the first value, the second value, the third value, and the fourth value computed for the image, and the first value, the second value, the third value, and the fourth value computed for each reference image and the respective wind speed values.

In various embodiments, the processing system can also use additional features. For example, in the preprocessing phase, the processing system can select the blocks for which the respective value indicative of the azimuth cutoff is within a given interval and the respective value indicative of the variance of the values of the respective block is within a given interval. Subsequently, the processing system can compute a fifth value indicative of the mean of the azimuth cutoff values of the selected blocks, a sixth value indicative of the median of the azimuth cutoff values of the selected blocks, a seventh value indicative of the mode of the azimuth cutoff values of the selected blocks, and an eighth value indicative of the mean of the variance values of the selected blocks. Therefore, in this case, the processing system can estimate the wind speed for the image also as a function of the fifth value, the sixth value, the seventh value, and the eighth value computed for the image, and the fifth value, the sixth value, the seventh value, and the eighth value computed for each reference image.

In various embodiments, in the preprocessing phase, the processing system can compute for each image a ninth value indicative of the mean incidence angle of the pixels from the respective image. Therefore, in this case, the processing system can estimate the wind speed for the image also as a function of the ninth value computed for the image and the ninth value computed for each reference image.

In various embodiments, the processing system uses a machine learning method for wind speed estimation, such as Gradient Boosting. For this purpose, during a training phase, the processing system can train a machine learning algorithm as a function of the first value, the second value, the third value, and the fourth value and optionally of additional features computed for at least a subset of the reference images and the respective wind speed values, such that the machine learning algorithm provides an estimate of wind speeds as a function of the first value, the second value, the third value, the fourth value and optionally the additional features. Subsequently, during a normal operation phase, the processing system can estimate the wind speed for the image by providing the machine learning algorithm with the first value, the second value, the third value, the fourth value and optionally the additional features computed for the image.

In various embodiments, the processing system can divide the set of reference datasets into a first and a second subset of reference datasets as a function of the fourth value or the eighth value, and train for the first subset of reference datasets a first machine learning algorithm and for the second subset of reference datasets a second machine learning algorithm. Therefore, in this case, the processing system can select the first machine learning algorithm or the second machine learning algorithm as a function of the fourth value or eighth value computed for the image, and estimate the wind speed for the image by providing the selected machine learning algorithm with the first value, the second value, the third value, the fourth value and optionally the additional features computed for the image.

### Brief description of the figures

The embodiments of the present description will now be described with reference to the accompanying drawings, which are provided by way of non-limiting example only, and in which:
- Figures 1, 2A and 2B schematically illustrate the operation of a typical synthetic aperture radar;
- Figure 3 shows an embodiment of a method for estimating the azimuth cutoff;
- Figure 4 shows a processing system capable of implementing the methods of the present description;
- Figures 5 and 6 show details during the estimation of the azimuth cutoff in the method of Figure 3;
- Figure 7 shows an embodiment of a method for estimating wind speed; and
- Figures 8, 9, 10 and 11 show details during the estimation of wind speed in the method of Figure 7.

### Detailed Description

In the following description, numerous specific details are set forth to provide a thorough understanding of the embodiments. The embodiments may be practiced without one or several specific details, or with other methods, components, materials, etc. In other instances, well-known operations, materials, or structures are not shown or described in detail to avoid obscuring aspects of the embodiments.

The reference throughout this description to "an embodiment" means that a particular feature, distinctive element, or structure described in connection with the embodiment is included in at least one embodiment. Thus, the use of the phrase "in an embodiment" in various parts of this description does not necessarily refer to the same embodiment. Furthermore, the particular features, distinctive elements, or structures may be combined in any suitable manner, in one or more embodiments.

The references are provided herein for convenience only and do not indicate the scope or meaning of the embodiments.

As mentioned before, various embodiments of the present disclosure concern solutions for estimating wind speed on inland water bodies, such as lakes and flooded areas. In particular, various embodiments of the present disclosure introduce an innovative approach in the field of wind speed estimation based on data obtained from a SAR.

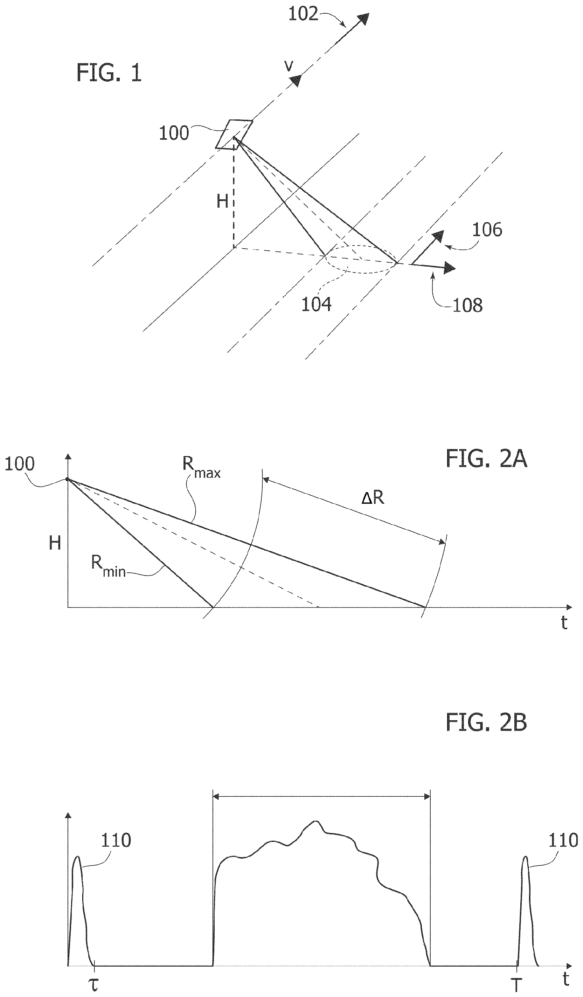

Figure 1 shows a typical system comprising a synthetic aperture radar (SAR). In particular, the system comprises an antenna 100, mounted on an aerospace vehicle, such as a satellite or an airplane, which moves at a given height H with a given velocity v in a specific direction 102. The antenna 100 emits pulses and receives the backscattered signal from an illuminated area 104. The movement direction of the vehicle is parallel to the azimuth direction 106 of the image, while the direction of radar illumination is indicated as the range direction 108 of the image.

In particular, as shown in Figure 2B, a SAR radar transmits pulses 110 with a period T, wherein each pulse 110 has a duration *τ*. Therefore, as illustrated in Figure 2A, each pulse 110 first reaches the nearest part of the illuminated surface, at a distance *Rₘᵢₙ*, and subsequently the farthest part of the illuminated surface, at a distance *Rₘₐₓ* = *Rₘᵢₙ* + Δ*R*. Assuming the electromagnetic wave propagates approximately at the speed of light c and must travel the distance twice, the antenna 100 begins to receive the reflected signal after a time (2 *Rₘᵢₙ)*/*c* for a duration equal to (2 *ΔR)*/*c* + *τ.*

In the azimuth direction, SAR differs from a real-aperture radar (RAR) because it records not only the amplitude of the received signal but also its phase. In particular, SAR records the phase of the signal reflected from a target point during the entire integration time it is illuminated by the SAR beam. This phenomenon can also be interpreted as a virtual network of antennas, separated from each other by a distance equal to *v* · *T.*

The use of all reflected pulses during the integration time for a coherent sum generates what is called a *single-look* image. Alternatively, these pulses can be divided into several sets based on their acquisition time, thus producing independent views of the same scene. The technique consisting of performing a coherent sum of these sets is called *multi-looking.*

To quantify the intensity of the radar signal measured by SAR, the Normalized Radar Cross Section (NRCS) is often considered, defined as the average intensity of the incident signal reflected towards the SAR antenna from a unit ground surface area. This intensity comprises several contributions. For example, with reference to wave monitoring, it is determined by Bragg scattering, quasi-specular reflection, and non-Bragg scattering caused by wave breaking. For instance, typically the SAR radar provides a matrix, similar to an image, in which each pixel has an NRCS value associated with a given monitored area. Furthermore, additional information can be associated with each pixel, such as the incidence angle. In particular, the incidence angle of a SAR is the angle between the direction of the radar beam and the normal to the Earth's surface at the observation point. In other words, it measures the inclination at which the electromagnetic wave emitted by the radar strikes the ground.

However, displacements of the sea surface introduce Doppler variations in the reflected radar signal. Since this information determines the position of scatterers in the azimuth direction, radar echoes are erroneously placed in a different position than the real one. These displacements of the sea surface, induced by ocean waves, are called orbital motions.

Therefore, the NRCS is not determined exclusively by the contribution of scatterers located within the considered cell. In fact, under the influence of wind wave motion, random contributions from scatterers from more distant positions interfere with each other, causing a signal averaging in the azimuth direction (azimuth cutoff phenomenon) and a consequent loss of contrast.

Consequently, known solutions for marine applications estimate the azimuth cutoff *λ_{c}* and then associate its value with wind speed. Several methods exist for estimating the azimuth cutoff. Some of them use the spectral domain. Alternatively, the estimation method proposed by Kerbaol is based on the azimuth autocorrelation function of a single SAR image. Fitting a Gaussian function to the part of this function responsible for signal modulation allows obtaining the azimuth cutoff wavelength *λ_{c}*. Furthermore, if multiple independent views of the same scene are available, a cross-correlation function can be used to improve the estimation of *λ_{c}*.

These operating principles of SAR radar are well known and described, for example, in the aforementioned article by Kerbaol, in the doctoral thesis of Kerbaol: "Analyse spectrale et statistique vent-vague des images radar à ouverture synthétique (ROS)-application aux données des satellites ERS1/2, " 1997, Université de Rennes I, France, or in the doctoral thesis of Husson Romain, "Development and validation of a global observation-based swell model using wave mode operating Synthetic Aperture Radar," 2012, Université de Bretagne Occidentale.

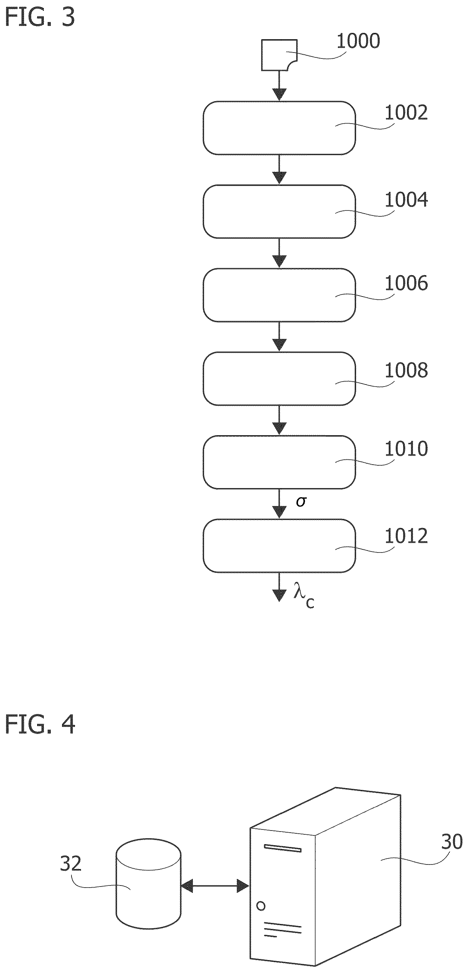

For example, with reference to Figure 3, an embodiment of a method for estimating the azimuth cutoff *λ_{c}* is described, as illustrated in the article by Corcione, V., Grieco, G., Portabella, M., Nunziata, F., Migliaccio, M., "A novel azimuth cutoff implementation to retrieve sea surface wind speed from SAR imagery," 2018, IEEE Transactions on Geoscience and Remote Sensing, 57(6), 3331-3340, the content of which is incorporated herein by reference. Such a method can be implemented via a computer 30.

For example, as shown in Figure 4, the computer 30 can be implemented with any processing system, possibly also in a distributed form, and can comprise, for example, a computer, a smartphone, a tablet and/or a remote server. Therefore, the operation of the computer 30 can be implemented via software code executed by one or more processors, i.e., via software code that instructs one or more processors of the computer 30 to implement the estimation method. In various embodiments, the computer 30 can manage a database 32.

In various embodiments, the processor(s) of the computer 30 can comprise one or more microprocessors and/or artificial intelligence accelerators, such as so-called Neural Processing Units (NPU).

In general, the method receives images 1000 provided by a SAR. For example, SAR images can be obtained from the ERS-1, ERS-2, ENVISAT and Sentinel-1 satellites. As mentioned before, each SAR image can comprise a given number of pixels, wherein each pixel has an associated respective NRCS value, and optionally a respective incidence angle.

In various embodiments, the computer 30 divides in a step 1002 each SAR image into blocks, where each block ***B*** corresponds to a matrix comprising a given number of pixels of the SAR image.

In various embodiments, the computer 30 estimates, for each block ***B*,** a respective azimuth cutoff value *λ_{c}*. For this purpose, in various embodiments, the computer 30 computes in a step 1004, for each block ***B*,** the power spectral density (PSD) in the azimuth direction.

For example, for this purpose, the computer 30 can compute the PSD as a two-dimensional matrix, i.e., with spectral data in the azimuth and range directions. Subsequently, the computer 30 can select the spectral data in the azimuth direction.

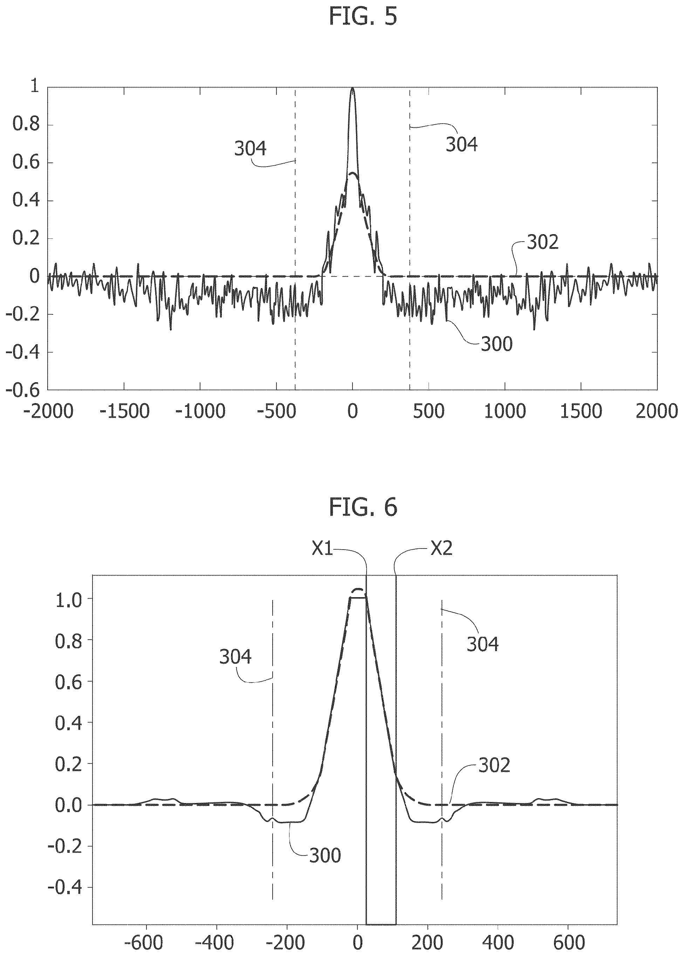

Subsequently, the computer 30 computes, in a step 1006, the autocorrelation function (ACF) of the PSD data in the azimuth direction. Essentially, the autocorrelation function corresponds to the inverse fast Fourier transform (IFFT). For example, Figure 5 shows a typical example of the trend of the autocorrelation function 300 in the azimuth direction.

Subsequently, the computer 30 approximates, in a step 1010, the autocorrelation function with a Gaussian function. For example, in various embodiments, step 1010 can be implemented with the "curve_fit" function of Python. Essentially, the Gaussian function *C*(*x*) corresponds to: $C \left(x\right) = A ⋅ {e}^{- \frac{{x}^{2}}{2 {σ}^{2}}}$ where *A* is the amplitude and *σ* the standard deviation. Therefore, the computer 30 can iteratively choose a standard deviation *σ* and subsequently vary the amplitude *A* in order to reduce the error between the autocorrelation function (ACF) and the Gaussian function.

For example, in various embodiments, the computer 30 computes the error *E* as the sum of absolute differences, or preferably via a sum of squared differences over a number *N* of values of the ACF function, for example: $E = \frac{1}{N} {\sum }_{i = 1}^{N} {\left[ACF\left({x}_{i}\right)-C\left({x}_{i}\right)\right]}^{2}$

For example, as shown in Figure 6, in various embodiments, the *N* values are chosen equidistant (with a distance Δ*x*) within an interval between two values *X1* and *X2,* i.e.: $N = \left(X2-X1\right) / Δ x + 1$

In various embodiments, the values *X1* and *X2* are chosen so as to include the Gaussian curve between a maximum percentage *c1* and a minimum percentage *c2* of the amplitude *A* of the Gaussian function. For example, in various embodiments, the value *X1* may correspond to the value of *x* for which the Gaussian function assumes a value equal to *c1 · A*, where *c1* is chosen between 0.9 and 0.99, while the value *X2* may correspond to the value of *x* for which the Gaussian function assumes a value equal to *c2 · A,* with *c*2 chosen between 0.1 and 0.01.

For example, in various embodiments, the value *X1* and/or the value *X2* can be chosen as a function of the standard deviation *σ*.

In various embodiments, as is known, before the fitting operation, the ACF function can be filtered in a step 1008, for example by means of a low-pass filter, to attenuate the peak around the value 0. In various embodiments, the computer 30 can filter the autocorrelation function data using a median filter. This procedure makes the autocorrelation function flatter around the value *x* = 0.

For example, in this case, the value *X1* can be chosen as a function of the median filter parameters. In various embodiments, *X1* corresponds to or is greater than the limit of this plateau, for example the first value *X1* corresponds to: $X 1 = \frac{L - 1}{2} Δ x$ where *L* represents the size of the median filter expressed in pixels.

Therefore, step 1010 provides the standard deviation *σ* of a Gaussian function 302, which best approximates (at least within a given interval) the autocorrelation function 300.

Finally, the computer computes in a step 1012 the azimuth cutoff *λ_{c}* as a function of the standard deviation *σ* of the Gaussian function, for example: ${λ}_{c} = \sqrt{2 πσ}$

In various embodiments, instead of using the autocorrelation function for a single block ***B*,** the computer 30 can compute a cross-correlation function between multiple blocks ***B*,** which concern the same geographical area. For example, this calculation is described in the article by J. E. Stopa, F. Ardhuin, B. Chapron, and F. Collard, "Estimating wave orbital velocity through the azimuth cutoff from space-borne satellites," Journal of Geophysical Research: Oceans, 2015, vol. 120, no. 11, pages 7616-7634, the content of which is incorporated herein by reference.

As explained before, in marine applications, the value of the azimuth cutoff *λ_{c}* is then directly associated with the wind speed *U*. However, the inventors have observed that this approach is not sufficient for water surfaces of reduced dimensions, such as lakes.

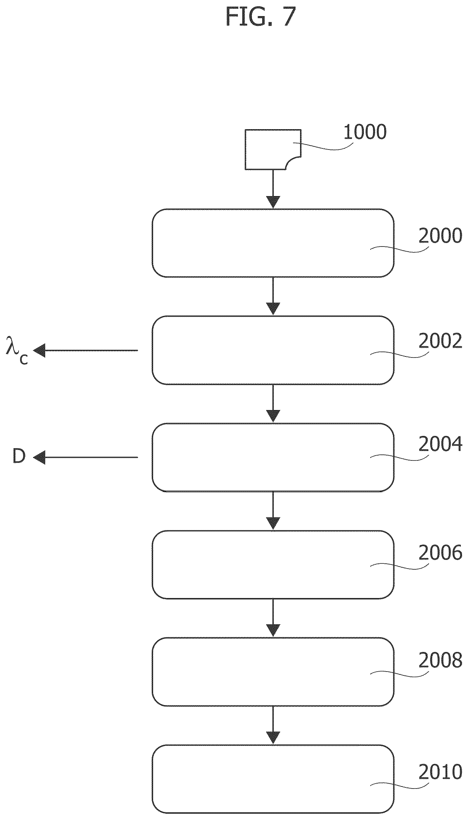

In particular, Figure 7 shows an embodiment for estimating wind speed, in accordance with the present disclosure.

Again, the computer 30 receives an image 1000 obtained from a SAR and divides it in a step 2000 into blocks ***B*.** For example, with reference to marine applications, images are typically divided into blocks ***B*** of 10 km × 10 km. Instead, in various embodiments, step 2000 uses smaller blocks ***B*,** for example with a size less than 5 km × 5 km, such as 1.28 km × 1.28 km. In the case of Sentinel-1 SAR images produced in Interferometric Wide Swath (IW) mode, which has a pixel spacing of 10 m, each block ***B*** can comprise respectively 128 × 128 pixels or 64 × 64 pixels of the SAR image. Therefore, in various embodiments, the number of pixels in the azimuth direction is chosen between 48 and 164 pixels, while the number of pixels in the range direction is chosen between 48 and 164 pixels, with a preference for blocks ***B*** with the same number of pixels both in the azimuth direction and in the range direction. In this way, each block ***B*** has between 480 and 1640 m in the azimuth direction 106 and between 480 and 1640 m in the range direction 108.

The use of smaller blocks ***B*** allows analyzing also lakes or flooded areas, which are less extensive than open ocean areas. In various embodiments, the number of blocks ***B*** is at least 10, and preferably at least 16. For instance, using at least 4 × 4 blocks ***B**,* where each block ***B*** corresponds to a minimum area of at least 500 m × 500 m, the minimum area that can be monitored corresponds to 2 km × 2 km, i.e., 4 km². The number of blocks ***B*** can also be higher. For example, typical lakes have a size up to 600 km², such as Lake Geneva (580 km²) and Lake Constance (536 km²).

Furthermore, in various embodiments, the computer 30 selects only the blocks ***B*** related to water-covered areas, excluding areas with emerged surface. For example, water-covered areas typically have different NRCS and/or azimuth cutoff *λ_{c}* values. Therefore, in various embodiments, the computer 30 may select only the blocks ***B*** for which the respective pixels have values within a given interval, for example only the blocks ***B*** for which the mean value of the pixels of the block ***B*** is within a given interval. Additionally or alternatively, the computer 30 may select only the blocks ***B*** for which the respective azimuth cutoff value *λ_{c}* (as calculated for the block ***B***) is within a given interval. Additionally or alternatively, in various embodiments, the computer 30 may use other information, such as for example location data associated with the block ***B*,** which may indicate the location of a lake. For example, location data can be obtained via a satellite navigation system, such as the Global Positioning System (GPS).

In various embodiments, the computer 30 estimates, in a step 2002, for each block ***B*,** the azimuth cutoff *λ_{c}*. For example, step 2002 can use the solution described with reference to Figure 3, in particular steps 1004 to 1012, which apply entirely.

In particular, in various embodiments, the computer 30 estimates a value indicative of the azimuth cutoff *λ_{c}* as a function of the square root of the standard deviation *σ*. In this context, the part $\sqrt{2 π}$ shown in equation (5) corresponds to a proportionality coefficient, which can be neglected when the azimuth cutoff *λ_{c}* is used only for estimating wind speed.

In the considered embodiment, the computer 30 also calculates, in a step 2004, for each block ***B*** a dispersion index or parameter *D*. In particular, in various embodiments, the computer 30 calculates, for each block ***B*,** the variance of the pixel values within the block ***B*.**

For example, in various embodiments, the computer 30 calculates the mean value of the pixel values in the block ***B*:** $m = \frac{1}{X ⋅ Y} {\sum }_{x = 1}^{X} {\sum }_{y = 1}^{Y} f \left(x, y\right)$ where *f*(*x, y)* corresponds to the pixel value at position (*x, y*), *X* corresponds to the number of pixels in the azimuth direction *x*, and *Y* corresponds to the number of pixels in the range direction *y*.

Subsequently, the computer calculates the value *D* as follows: $D = {σ}^{2} = \frac{1}{X ⋅ Y} {\sum }_{x = 1}^{X} {\sum }_{y = 1}^{Y} {\left[f\left(x, y\right)-m\right]}^{2}$

Therefore, in various embodiments, the computer 30 determines for each block **B** a respective value indicative of the azimuth cutoff *λ_{c}* and a respective dispersion index *D* indicative of the variance of the pixel values of the block **B.** In particular, since the image 1000 is divided into *n* blocks ***Bᵢ**,* the computer obtains *n* azimuth cutoff values *λ_{c,i}* and dispersion indices *Dᵢ,* for example expressed as vectors of dimension *n.*

In various embodiments, the computer 30 processes, in a step 2006, this data to determine a plurality of statistical parameters.

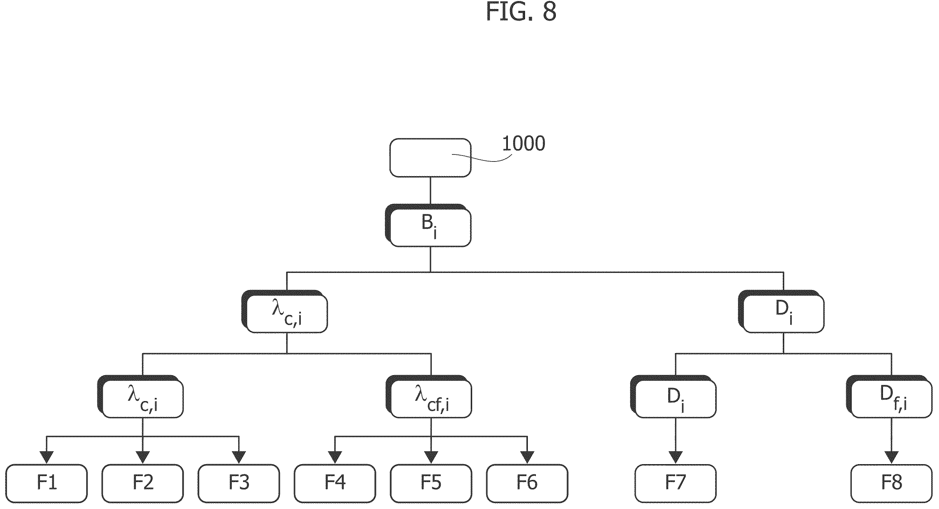

In particular, as shown in Figure 8, each image 1000 is used to generate *n* blocks ***B**,* and for each block ***Bᵢ*** a respective value indicative of the azimuth cutoff *λ_{c}* and a respective dispersion index *D* is determined, i.e., values *λ_{c,i}* and *Dᵢ* for each block ***Bᵢ**.*

In various embodiments, the computer 30 calculates, for each set of *n* azimuth cutoff values *λ_{c,i}*, the values of mean, median, and/or mode, thereby obtaining respective parameters *F1, F2* and/or *F3.*

In particular, in various embodiments, the computer 30 calculates the parameter *F1* as the arithmetic mean, i.e.: $F 1 = \frac{1}{n} {\sum }_{1}^{n} {λ}_{c , i}$

Instead, in various embodiments, to determine the parameter *F2*, the computer 30 sorts the list of values *λ_{c,i}* in ascending (or descending) order. Subsequently, if the number *n* is odd, the median corresponds to the central value, i.e., the value occupying position (*n +* 1)/2. Instead, if the number *n* is even, the median is estimated using the two values occupying positions *n*/2 and *n*/2+1. For example, in various embodiments, the computer 30 chooses the arithmetic mean of the two values as the median.

Finally, in various embodiments, the mode corresponds to the value with the maximum frequency. For example, to determine the parameter *F3,* the computer 30 can determine a histogram of the values *λ_{c,i}*, possibly quantizing them, and choose the value *λ_{c,i}* (possibly quantized) that occurs most frequently.

Therefore, in various embodiments, the computer 30 obtains for the image 1000 three parameters: F1 (mean), *F2* (median), and *F3* (mode). In various embodiments, the computer 30 might use fewer parameters, for example only parameters *F1* and *F3,* or only *F2* and *F3.*

In various embodiments, the computer 30 also calculates at least one statistical parameter for the dispersion indices *Dᵢ*. For example, in various embodiments, the computer calculates a parameter *F7* as the arithmetic mean of the dispersion indices *Dᵢ,* i.e.: $F 7 = \frac{1}{n} {\sum }_{1}^{n} {D}_{i}$

In various embodiments, the values *λ_{c,i}* and/or *Dᵢ* can be filtered, generating filtered values *λ_{cf,i}* and/or *D_{f,i}.* For example, in various embodiments, these filters are chosen to remove any outliers from the values. For example, in various embodiments, the computer 30 keeps only the datasets *i* for which the respective values *λ*_{c,*i*} and *D_{,i}* fall within certain intervals.

For example, in various embodiments, the computer 30 determines whether the value *λ_{c,i}* is between a minimum threshold *λ_{c,min},* for example *λ_{c,min}* = 10, and a maximum threshold *λ_{c,max},* for example *λ_{c,max} =* 250. This interval allows selecting only reliable values in contexts characterized by low to moderate wind conditions.

Similarly, in various embodiments, the computer 30 determines whether the value *Dᵢ* is between a minimum threshold *Dₘᵢₙ* and a maximum threshold *Dₘₐₓ.* For example, in various embodiments, the minimum threshold *Dₘᵢₙ* is 0 (i.e., not considered), and the maximum threshold *Dₘₐₓ* is a constant representing a typical dispersion value for a sample taken from a homogeneous water area. This limit ensures that only high-quality data are considered, minimizing the influence of anomalies or non-representative fluctuations.

In various embodiments, this operation is repeated for all *n* datasets composed of respective *λ_{c,i}* and *Dᵢ*. Therefore, in various embodiments, the computer 30 retains a dataset *i* only if the respective value *λ_{c,i}* (hereinafter referred to as *λ_{cf,i}*) is between the minimum threshold *λ_{c,min}* and the maximum threshold *λ_{c,mar},* and the respective value *Dᵢ* (hereinafter referred to as *D_{f,i})* is between the minimum threshold *Dₘᵢₙ* and the maximum threshold *Dₘₐₓ* (or lower than the maximum threshold *Dₘₐₓ*). Thus, the computer 30 obtains a new set of *m* values *λ_{cf,i}* and *D_{f,i},* with m ≤ n.

In addition to or as an alternative to the values *F1, F2, F3* and/or *F7,* the computer 30 can also determine statistical values for these *m* filtered datasets. For example, in various embodiments, the computer 30 computes for each set of *m* filtered values *λ_{cf,i}* the mean value, median value and/or mode value, thereby obtaining respective parameters *F4, F5* and *F6.* Furthermore, in various embodiments, the computer 30 computes a parameter *F8* as the arithmetic mean of the filtered dispersion indices *Df,i.* For a description of the respective computation, reference can be made to the parameters *F1, F2, F3* and F7.

Therefore, in various embodiments, the computer 30 estimates at a step 2010 the wind speed *U* using one or more of the previous parameters, in particular one or more of the parameters from *F1* to *F8,* so-called *features.* For example, in various embodiments, the computer uses the features obtained from the filtered data, for example, *F4, F5, F6* and *F8,* or preferably all features from *F1* to *F8.*

For example, in various embodiments, step 2010 uses an estimator that utilizes a database, for example the database 32 shown in Figure 4, which comprises a plurality of reference datasets.

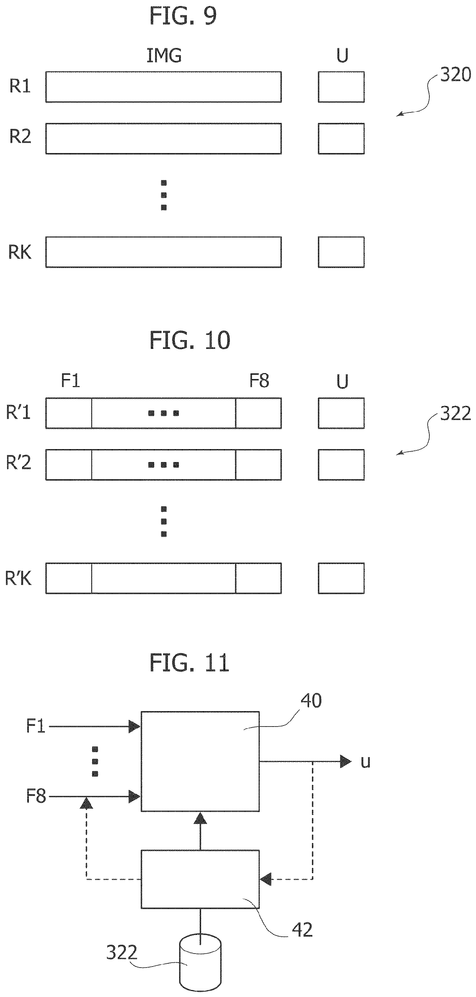

For example, as shown in Figure 9, in various embodiments, the database 32 stores a table 320 comprising *K* reference datasets, indicated as R1-RK, wherein each dataset comprises an image IMG obtained via a SAR and a related wind speed *U*. In various embodiments, the images IMG may concern the same geographical area as the image 1000 or preferably images IMG that concern a plurality of lakes (or flooded surfaces), preferably of different sizes. In this way, the table 320 provides representative data for different areas and wind conditions. Therefore, the images IMG may concern the same area as the image 1000 or (at least in part) different areas.

Thus, as shown in Figure 10, during a preprocessing phase, the computer 30 processes each dataset via steps 2000-2006 to obtain the features *FI-F8* for each dataset, thereby obtaining a pre-processed table 322 comprising for each dataset, indicated as R'1-R'K, the respective values of the features *F1-F8* and the respective wind speed U. In various embodiments, the database 32 may store only the table 322.

In various embodiments, the values of the features *F1-F8* of the datasets R'1-R'K and similarly the values of the features *F1-F8* obtained for the image 1000 can be normalized. For example, for this purpose, the computer 30 can determine the maximum value of each feature of the datasets R'1-R'K and divide each value by the respective maximum value. In various embodiments, instead of directly normalizing the values of the features *F1-F8,* the computer 30 can normalize the respective azimuth cutoff values *λ_{c}* and dispersion values *D,* since the features *F1-F8* correspond to statistical data obtained as functions of these values.

In various embodiments, the computer 30 computes an additional feature *F9* as a function of the incidence angles associated with the pixels of blocks ***B*.** For example, in various embodiments, the computer computes for this purpose the mean value of the incidence angles of the respective image. Instead of computing a mean value for the entire image, the computer can compute the mean value of the incidence angles for the pixels of each block ***B,*** and then compute the value of the feature *F9* as the overall mean value as a function of the mean values of the blocks ***B*** used (i.e., those that concern a water-covered surface). In various embodiments, this value can also be normalized.

In general, step 2010 can use any algorithm suitable for estimating wind speed using the current values of the features *FI-F9* (or a related subset thereof), i.e., those obtained for the current SAR image 1000, and the reference datasets 320 and/or 322.

For example, in various embodiments, the computer 30 can select one or more datasets from table 322 for which the respective values for the parameters from *F1* to *F9* are most similar to the current values for the parameters from *F1* to *F9.* For example, for this purpose, the computer can compute an error function, such as the sum of absolute differences between the parameters from *F1* to *F9.* Subsequently, the computer 30 can use the wind speed value(s) *U* of the selected datasets to estimate the current wind speed, for example via a mean value of the values from the selected datasets.

Alternatively, as shown in Figure 11, the computer 30 can use table 320 and/or table 322 to train a machine learning (ML) algorithm, such as an artificial neural network (ANN). Substantially, in this case, the computer 30 uses a parameterized mathematical function 40 configured to provide an estimate of the wind speed *U*' as a function of the values of the features *F1-F9* (or a subset of the features *FI-F9).*

In this case, the computer 30 performs a training operation 42 that iteratively varies the parameters of the function 40 as a function of the (training) dataset 322. Substantially, for this purpose, the computer 30 applies the values of the features *F1-F9* of the various datasets R'1-R'K to the input of the estimator 40 and monitors each estimation result *U'*. Furthermore, the computer 30 iteratively varies the values of the parameters of the function 40 to minimize the error between the wind speed estimates *U'* provided by the mathematical function 40 and the wind speed values *U* stored in the table 322. The various mathematical functions, such as neural networks, and their training are per se well known to the person skilled in the art.

In this context, the inventors have observed that models trained on all data 322 may show unsatisfactory estimation results in the presence of high-intensity winds. For this reason, in various embodiments, the computer 30 can perform a discrimination step 2008, adopting a structured approach that allows preliminarily distinguishing between different levels of wind intensity. Essentially, the discrimination step uses a classifier configured to estimate a (macro) class for wind speeds as a function of the available parameter values, for example the values of the features *FI-F9,* and/or the values *λ_{c,i}* and/or *Dᵢ*.

For example, in various embodiments, this phase uses one or more empirical thresholds to define the boundaries between the different wind speed classes, separating regions characterized by weak winds from those with moderate and strong winds. An empirical threshold is a value obtained from experimental data or observational studies, rather than derived from a theoretical model. This means that the resulting threshold reflects the average conditions or historical parameters of wind movement, allowing for a more practical and precise wind force prediction. This threshold value can derive from previous experiments, analysis of meteorological data, or observation of similar events. Therefore, when a threshold based on empirical evidence is used, the discrimination approach can be considered highly reliable and useful, as it reflects the real characteristics of wind speed rather than being limited to a theoretical or laboratory context.

In various embodiments, this discrimination uses the dispersion coefficient D, the reference parameter that defines the amplitude of the geographical variability of wind speed. For example, for this purpose, the computer can use the value of the feature *F7* (or *F8*) since this value indicates the overall dispersion of the considered blocks ***B**.* In this context, dispersion measures the degree of variability present in wind speeds and can indicate whether atmospheric conditions in a given area are stable or continuously evolving. High dispersion values suggest that the wind is undergoing variations or is decreasing, while low dispersion indicates a constant and well-defined wind, with minimal variations in speed. For example, when the threshold for the dispersion coefficient *D* is set to 0.1, this value represents the threshold beyond which the variability of wind speed is considered significant. Beyond this limit, the wind shows marked fluctuation, indicating potential unstable atmospheric conditions. For example, in the case where the feature *F7* exceeds this threshold, for instance with a value of 0.2, the analysis of the blocks ***B*** highlights a relevant dispersion in wind speeds. A situation of this type can be interpreted as an index of atmospheric instability or rapid changes in meteorological conditions, phenomena that may suggest the approach of a front or the presence of turbulence. Conversely, when the value of *F7* is less than 0.1, as in the case of 0.08, the dispersion remains contained, signaling a relatively constant wind. Under such conditions, the atmosphere can be considered stable, without significant variations that could indicate sudden changes.

The objective of applying this empirical threshold to the dispersion parameter is to subdivide the data into groups with similar predictive characteristics, which will subsequently be used separately to develop reliable predictive models.

Therefore, in various embodiments, the computer 30 obtains the table 320, wherein each dataset R1-Rk comprises the data of an image IMG obtained from a SAR and the respective wind speed *U*. Subsequently, the computer 30 calculates for each dataset R1-Rk the values *λ*_{*c*,*i*} and *Dᵢ,* and the respective features *F1-F9.* In various embodiments, the computer 30 stores at least the features *F1-F9* and the wind speed value *U* in a new table 322.

In particular, in various embodiments, the computer 30 divides in step 2008 the datasets of table 322 into two or more groups or sets of datasets, wherein each set of datasets comprises the datasets associated with a given wind speed class. For example, each set can be stored in a respective table, or the table 322 can comprise a field indicating the wind class of the respective dataset.

For example, in various embodiments, the computer 30 uses two groups/sets of datasets, wherein the first set of datasets comprises the datasets for which the value *F7* (or *F8*) is less than the (empirical) threshold and the second set of datasets comprises the datasets for which the value *F7* (or *F8*) is greater than the (empirical) threshold. In various embodiments, the computer 30 can also divide the datasets into more sets associated with respective classes, such as weak, moderate, and strong wind.

Therefore, in various embodiments, once the discrimination process at step 2008 is completed, wherein the datasets R'1-R'K have been separated into distinct classes based on their intensity (such as for example weak winds and moderate/strong winds), the computer 30 trains at step 2010 a respective estimator for each set of datasets. Therefore, by determining the class for the current values obtained for the image 1000, for example by comparing the value of the feature *F7* (or *F8)* with the empirical threshold, the computer 30 can use the corresponding estimator to estimate the wind speed *U*' for the data of the current SAR image 1000, for example as a function of the values of the features *FI-F9.*

In this context, the inventors have analyzed the wind speed estimates *U*' within each class. For example, for this purpose, the accuracy of the predictions was evaluated, distinguishing between winds that were successfully predicted and those that were not correctly estimated. This ensures that the discrimination model does not only limit itself to classifying winds, but also provides useful and meaningful information to improve the accuracy of predictions within each class.

Furthermore, various machine learning models have been explored and tested with the objective of improving the accuracy of wind speed predictions. Machine learning is particularly suited to this type of problem due to its ability to analyze large datasets, identify complex patterns, and provide data-based predictions. Several ML models are capable of learning from input data and refining their predictive capabilities through a continuous training process.

The *Gradient Boosting* method has emerged as one of the most reliable and effective for this specific application. One of the main advantages of Gradient Boosting is its ability to minimize prediction errors by focusing on the cases that are most difficult to predict. In this scenario, where accurate wind prediction is crucial, Gradient Boosting excels because it continuously learns from its own errors and progressively refines its predictions.

The method works through an iterative process where new models, often decision trees, are progressively added, focusing on the residual errors left by previous models. In this way, the model continuously improves its performance over time. Essentially, while a neural network is a single parameterized mathematical function, Gradient Boosting uses a combination of different functions. Essentially, Gradient Boosting belongs to the category of *ensemble learning.*

Furthermore, Gradient Boosting is particularly suited to complex datasets with high variability, such as those related to wind speed. Wind behavior is intrinsically unpredictable and influenced by numerous environmental factors. The ability of Gradient Boosting to identify and model subtle patterns in the data makes it highly effective in this context.

The validity of the Gradient Boosting method was measured using a combination of evaluation metrics, such as accuracy, precision, and recall. These metrics help determine how well the model distinguishes between correct and incorrect predictions.

Furthermore, through cross-validation techniques, the model was trained and tested on different subsets of data, ensuring that its predictions were robust and not overfitted to a single dataset.

The Gradient Boosting method provided the most consistent and reliable performance in predicting wind speeds across all considered classes. This made it the preferred model for this specific application, as it achieved a balance between prediction accuracy and generalization capability on new, previously unseen data. However, other machine learning algorithms can also be used.

Therefore, in various embodiments, the computer 30 can train a respective model for each class, for example a respective Gradient Boosting model. For instance, the computer 30 can train two independent Gradient Boosting models for the first dataset set with weak wind speed and the second dataset set with moderate/strong wind speed, respectively. This approach allows each model to be specifically adapted to the unique characteristics and patterns of the respective wind class, thus improving the overall prediction accuracy. By using separate models, it is possible to effectively capture the distinctive dynamics associated with weak winds and moderate/strong winds, ensuring that the peculiarities of each class are adequately represented and managed in the predictive analysis. Moreover, this primary categorization/classification represents only a starting point. It provides an initial reference for assessing wind conditions, which precedes the final step of wind speed estimation.

Therefore, once the various models for the wind classes are trained, the computer also estimates the wind class for the current conditions determined for the SAR image 1000. For example, the estimator, such as Gradient Boosting, can be implemented with Python.

For example, as mentioned earlier, the computer 30 can use the dispersion for this purpose, for instance feature F7 (or F8). Therefore, once the current class is determined, the computer 30 uses the model associated with the chosen class to estimate the wind speed U' as a function of the values of features F1-F9 (or the selected subset of features).

Naturally, without prejudice to the underlying principles of the invention, the construction details and embodiments may vary widely from what has been described and illustrated here purely by way of example, without thereby departing from the scope of the present invention, as defined by the appended claims.

## Claims

1. A method for estimating wind speed by means of at least one computer (30), the method comprising the following steps:
- receiving an image (1000) obtained from a synthetic aperture radar (100), wherein said image (1000) relates at least in part to an area covered by water;
- receiving a set (320) of reference datasets (R1-RK), wherein each reference dataset (R1-RK) comprises a respective reference image (IMG) obtained from a synthetic aperture radar (100) and a respective wind speed value (*U*), wherein each reference image (IMG) relates at least in part to an area covered by water;
- during a preprocessing phase (2000-2006), repeating the following steps for said image (1000) and each reference image (IMG):
- dividing (2000) the image (IMG, 1000) into blocks (***Bᵢ***) and selecting the blocks (***Bᵢ***) which relate to the respective area covered by water,
- estimating (2002; 1004-1012) for each block (***Bᵢ***) a value (*λ_{c,i}*) indicative of the azimuth cutoff,
- calculating (2004) for each block (***Bᵢ***) a value (*Dᵢ*) indicative of the variance of the values of the respective block (***Bᵢ***), and
- calculating a first value (*F1; F4)* indicative of the mean of said azimuth cutoff values (*λ_{c,i}*), a second value (*F2; F5*) indicative of the median of said azimuth cutoff values (*λ_{c,i}*), a third value (*F3; F6*) indicative of the mode of said azimuth cutoff values (*λ_{c,i}*), and a fourth value *(F7; F8)* indicative of the mean of said variance values (*Dᵢ*); and
- estimating the wind speed for said image (1000) as a function of said first value (*F1; F4),* said second value (*F2; F5*)*,* said third value (*F3; F6)* and said fourth value (*F7; F8)* calculated for said image (1000), and said first value (*F1; F4),* said second value (*F2*; *F5),* said third value (*F3; F6*) and said fourth value (*F7; F8)* calculated for each reference image (IMG) of said set (320) of reference datasets (R1-RK) and the respective wind speed values (*U*).

2. The method according to Claim 1, wherein each block (***Bᵢ***) relates to an area between 480 and 1640 m in an azimuth direction (106) and between 480 and 1640 m in a range direction (108).

3. The method according to Claim 1 or Claim 2, wherein said selecting the blocks (***Bᵢ***) which relate to said area covered by water comprises selecting the blocks for which the respective pixels have values in a predetermined first interval and/or the respective value (*λ_{c,i}*) indicative of the azimuth cutoff is in a predetermined second interval.

4. The method according to any of the previous claims, wherein said areas covered by water are lakes or flooded areas.

5. The method according to any of the previous claims, wherein said estimating (2002; 1004-1012) for a block (***Bᵢ***) a value (*λ_{c,i}*) indicative of the azimuth cutoff comprises:
- calculating (1004) for the block (***Bᵢ***) the power spectral density in the azimuth direction;
- calculating (1006) the autocorrelation function of the power spectral density in the azimuth direction or the cross-correlation function of the power spectral density in the azimuth direction of multiple blocks that relate to the same geographic area;
- approximating (1010) the autocorrelation or cross-correlation function with a Gaussian function; and
- calculating the value (*λ_{c,i}*) indicative of the azimuth cutoff as a function of the standard deviation (σ) of the Gaussian function.

6. The method according to any of the previous claims, wherein said preprocessing phase (2000-2006) comprises:
- selecting the blocks (***Bᵢ***) for which the respective value (*λ_{c,i}*) indicative of the azimuth cutoff is within a predetermined third interval and the respective value (*Dᵢ*) indicative of the variance of the values of the respective block (***Bᵢ***) is within a predetermined fourth interval;
- calculating a fifth value (*F4*) indicative of the mean of the azimuth cutoff values (*λ_{c,i}*) of the selected blocks (***Bᵢ***), a sixth value (*F5)* indicative of the median of said azimuth cutoff values (*λ_{c,i}*) of the selected blocks (***Bᵢ***), a seventh value (*F6*) indicative of the mode of said azimuth cutoff values (*λ_{c,i}*) of the selected blocks (***Bᵢ***), and an eighth value (*F8*) indicative of the mean of said variance values (*Dᵢ*) of the selected blocks (***Bᵢ***);
wherein the method comprises estimating the wind speed for said image (1000) also as a function of said fifth value (*F4*), said sixth value (*F5*), said seventh value (*F6*), and said eighth value (*F8*) calculated for said image (1000), and said fifth value (*F4*), said sixth value (*F5*)*,* said seventh value (*F6*), and said eighth value (*F8*) calculated for each reference image (IMG) of said set (320) of reference datasets (R1-RK).

7. The method according to any of the previous claims, wherein said preprocessing phase (2000-2006) comprises:
- calculating for each image (IMG, 1000) a ninth value (*F9*) indicative of the average incidence angle of the pixels of the respective image (IMG, 1000);
wherein the method comprises estimating the wind speed for said image (1000) also as a function of said ninth value (*F9*) calculated for said image (1000) and said ninth value (*F9*) calculated for each reference image (IMG) of said set (320) of reference datasets (R1-RK).

8. The method according to any of the previous claims, wherein said estimating the wind speed for said image (1000) comprises:
- during a training phase, training a machine learning algorithm (40; 42) as a function of said first value (*F1; F4*)*,* said second value (*F2; F5*)*,* said third value (*F3; F6*)*,* said fourth value (*F7*; *F8*), and optionally said ninth value *(F9)* calculated for at least a subset of the reference images (IMG) of said set (320) of reference datasets (R1-RK) and the respective wind speed values (*U*), so that said machine learning algorithm (40; 42) provides an estimate of the wind speed values (*U'*) as a function of said first value (*F1*; *F4),* said second value (*F2; F5*)*,* said third value (*F3; F6*), said fourth value (*F7; F8*), and optionally said ninth value (*F9*); and
- during a normal operation phase, estimating the wind speed for said image (1000) by providing to said machine learning algorithm (40; 42) said first value (*F1*; *F4),* said second value (*F2; F5*)*,* said third value (*F3; F6*)*,* said fourth value (*F7; F8*), and optionally said ninth value (*F9*) calculated for said image (1000).

9. The method according to Claim 8, wherein said estimating the wind speed for said image (1000) comprises:
- dividing said set (320) of reference datasets (R1-RK) into a first and a second subset of reference datasets (R1-RK) as a function of said fourth value (*F7*) or said eighth value (*F8*);
- training for said first subset (320) of reference datasets (R1-RK) a first machine learning algorithm (40; 42), and for said second subset (320) of reference datasets (R1-RK) a second machine learning algorithm (40; 42);
- selecting said first machine learning algorithm (40; 42) or said second machine learning algorithm (40; 42) as a function of the fourth value (*F7*) or eighth value (*F8*) calculated for said image (1000); and
- estimating the wind speed for said image (1000) by providing to said selected machine learning algorithm (40; 42) said first value (*F1*; *F4*)*,* said second value (*F2; F5*)*,* said third value (*F3; F6),* said fourth value (*F7; F8),* and optionally said ninth value (*F9*) calculated for said image (1000).

10. The method according to Claim 8 or Claim 9, wherein said machine learning algorithm (40; 42) is Gradient Boosting.

11. A system comprising at least one computer (30) configured to implement the method according to any one of the preceding claims.

12. A computer program product loadable into a memory of at least one processor, wherein the computer product comprises portions of software code which, when executed by said at least one processor, cause said at least one processor (30) to perform the steps of the method according to any of Claims 1 to 10.
